# EUROPEAN PATENT APPLICATION

(11) **EP 1 787 710 A2**
(43) Date of publication of application: **23.05.2007**
(21) Application number: 06123928.1
(22) Date of filing: 13.11.2006
(51) Int. Cl.: B01D 53/94, B01J 23/10, B01J 21/06

(54) **Exhaust gas purification catalyst and method of fabricating the same**

(30) Priority: 22.11.2005 JP 2005337085
(71) Applicant: Mazda Motor Corporation, Aki-gun, Hiroshima 730-8670 (JP)
(72) Inventor: Miyoshi, Seiji,c/o Mazda Motor Corporation, 730-8670 Hiroshima Hiroshima (JP); Takami,Akihide,c/o Mazda Motor Corporation, 730-8670 Hiroshima Hiroshima (JP); Harada, Koichiro, c/o Mazda Motor Corporation, 730-8670 Hiroshima Hiroshima (JP); Minoshima,Koji,c/o Mazda Motor Corporation, 730-8670 Hiroshima Hiroshima (JP); Iwakuni,Hideharu,c/o Mazda Motor Corporation, 730-8670 Hiroshima Hiroshima (JP); Yamada,Hiroshi,c/o Mazda Motor Corporation, 730-8670 Hiroshima Hiroshima (JP)
(74) Representative: Laufhütte, Dieter

(57) **Abstract**

An exhaust gas purification catalyst comprises an oxygen storage component constituted by a mixed oxide containing cerium and zirconium, and a catalytic metal and a NOx storage component are carried on the oxygen storage component. The oxygen storage component is in the form of porous secondary particles in each of which primary particles of an average particle size of less than 10 nm cohere to form fine pores inside each said secondary particle.

## Description

### BACKGROUND OF THE INVENTION

### (a) Field of the Invention

This invention relates to exhaust gas purification catalysts and methods of fabricating the same.

### (b) Description of the Related Art

Exhaust gas purification catalysts for motor vehicles are known in which a catalytic metal is carried on an oxygen storage component to improve catalytic activity. For example, Published Japanese Patent Applications Nos. H11-19514 and H09-155192 disclose three-way catalysts in which precious metal is carried on particles that contain ceria (Ce) and zirconia (Zr) dissolved in each other and have oxygen storage capacity. In addition, Published Japanese Patent Application No. H11-19514 discloses that the oxygen storage particles have a Zr/(Ce+Zr) mol ratio of from 0.55 to 0.90 both inclusive and have an average crystallite size of 10 nm or less. Published Japanese Patent Application No. H09-155192 also discloses that the oxygen storage particles have a Zr/(Ce+Zr) mol ratio of from 0.25 to 0.75 both inclusive and have an average crystallite size of 50 nm or less.

### SUMMARY OF THE INVENTION

What is important for exhaust gas purification catalysts is to highly disperse metal components, such as catalytic metals, on an oxide support to thereby increase the number of opportunities of their contact with exhaust gas components and prevent sintering of the metal components. To accomplish this, it is desirable to increase the specific surface area of the oxide support carrying the metal components thereon. Particularly, the oxygen storage component is desired to have a large specific surface area even after exposed to high-temperature exhaust gas, because this plays an important part in the extension of the A/F window (the range of the air-fuel ratio) of the catalyst acting as a three-way catalyst and in the reduction of metal components carried on the oxygen storage component (in turn, preservation of activity due to the reduction).

With the foregoing in mind, the present invention has an object of increasing the specific surface area of a Ce-Zr-based oxygen storage component having excellent oxygen storage capacity (OSC) and thermal resistance, thereby further improving catalytic activity and durability.

To attain the above object, in the present invention, primary particles of a Ce-Zr-based mixed oxide (composite oxide) constituting an oxygen storage component are provided to have an average particle size of less than 10 nm.

Specifically, a first solution of the present invention is directed to an exhaust gas purification catalyst comprising: an oxygen storage component constituted by a mixed oxide containing cerium and zirconium; and a catalytic metal carried on the oxygen storage component and characterized in that
the oxygen storage component is in the form of secondary particles in each of which primary particles of an average particle size of less than 10 nm cohere to form fine pores inside each said secondary particle and
a NOx storage component is also carried on the oxygen storage component.

Since the oxygen storage component has minute-size primary particles each formed by cohesion of crystallites, its specific surface area is large, which provides high-dispersibility carrying of the catalytic metal on the oxygen storage component. Further, since the primary particles of the oxygen storage component are of minute particle size, it can quickly store and release oxygen, which provides excellent catalytic activity (light-off performance). In addition, the catalyst maintains a relatively large specific surface area even after exposed to high-temperature exhaust gas. Therefore, the catalytic metal can be prevented from sintering, which is advantageous in ensuring high exhaust gas purification performance for a long time.

If the average particle size of the primary particles is excessively small, the size of fine pores becomes excessively small, which makes it difficult for exhaust gas components to diffusively enter the fine pores. Therefore, the lower limit of the average primary particle size may be set at, but not exclusively limited to, about 3 to 4 nm, for example.

Furthermore, since a NOx storage component is also carried on the oxygen storage component. the exhaust gas purification catalyst can allow the NOx storage component to store NOx in exhaust gas at lean A/F ratios and allow the catalytic metal to reduce NOx released from the NOx storage component at rich A/F ratios, which is advantageous in improving the NOx conversion performance.

A second solution of the invention is directed to the first solution and characterized in that at least one of the catalytic metal and the NOx storage component is carried on the surface of the oxygen storage component and the insides of the fine pores.

Where the particle size of the primary particles is less than 10 nm, each secondary particle constituted by a cohesive form of primary particles has a large number of fine pores of several nanometer diameter formed therein. According to the present invention, at least one of the catalytic metal and the NOx storage component is substantially uniformly carried not only on the surfaces of the secondary particles but also on the insides of their fine pores and thereby brought into contact with exhaust gas components entering the fine pores, which is advantageous in improving the exhaust gas purification performance.

A third solution of the invention is a method suitable for fabrication of the above exhaust gas purification catalyst and characterized by comprising the steps of:
obtaining an oxygen storage component constituted by a mixed oxide containing cerium and zirconium and in the form of secondary particles in each of which primary particles of an average particle size of less than 10 nm cohere to form fine pores inside each said secondary particle;
preparing a suspension in which the oxygen storage component is dispersed in a water solution of a mixture of catalytic metal ions and metal ions serving as a NOx storage component; and
subjecting the suspension in a container to vacuum degasification concurrently with heat application to evaporate water, thereby carrying the catalytic metal and the NOx storage component on the surface of the oxygen storage component and the insides of the fine pores.

Since, as described above, the oxygen storage component is formed by cohesion of primary particles of an average particle size of less than 10 nm, fine pores formed inside are minute (have diameters of less than several nanometers). Therefore, with the use of normal impregnation and evaporation to dryness, a solution of the catalytic metal and the NOx storage component is less likely to enter the fine pores. The resultant catalyst is likely to come to a state where the catalytic metal and the NOx storage component are not carried on the insides of the fine pores but carried only on the surface of the support.

To cope with this, the present invention employs vacuum degasification in order to carry the catalytic metal and the NOx storage component on the oxygen storage component. With the use of vacuum degasification, a solution of catalytic metal ions and NOx storage component ions enter the fine pores concurrently with removal of air from the fine pores. Since in this state the oxygen storage component is heated to evaporate water, this ensures that the catalytic metal and the NOx storage component are carried not only on the surface of the oxygen storage component but also on the insides of the fine pores. Accordingly, a catalyst can be obtained in which the catalytic metal and the NOx storage component are carried substantially uniformly over the surfaces of the secondary particles and the insides of their fine pores, which is advantageous in improving the catalytic activity and preventing sintering of the catalytic metal.

The pressure in the container is preferably set at approximately 10 kPa to approximately 30 kPa and the temperature therein is preferably set at 65°C or more.

In the above solutions, preferable catalytic metals include platinum (Pt), rhodium (Rh) and iridium (Ir) and preferable NOx storage components used in the exhaust gas purification catalyst include alkali earth metals, such as barium (Ba), and alkali metals, such as potassium (K).

### BRIEF DESCRIPTION OF THE DRAWINGS

Figure **1** is a transmission electron microscopy (TEM) photograph of a CeO₂-rich oxygen storage component according to an example of the present invention.
Figure **2** is another TEM photograph with higher magnification of the same oxygen storage component.
Figure **3** is a TEM photograph of a ZrO₂-rich oxygen storage component according to an example of the present invention.
Figure **4** is another TEM photograph with higher magnification of the same oxygen storage component.
Figure **5** is a graph showing the lean NOx conversion efficiencies of catalysts of examples of the present invention and a catalyst of a comparative example under low temperature conditions.
Figure **6** is a graph showing the amounts of NOx exhausted as unconverted when the catalysts of the examples of the present invention and the catalyst of the comparative example were used under rich A/F and low temperature conditions.
Figure **7** is a graph showing the BET specific surface areas of oxygen storage components according to the examples of the present invention and an oxygen storage component of the comparative example.

### DETAILED DESCRIPTION OF THE INVENTION

An embodiment of the present invention will be described below with reference to the drawings.

An exhaust gas purification catalyst according to the present invention is particularly useful as a catalyst for converting HC, CO and NOx in exhaust gas from a car engine, especially, a NOx storage catalyst suitable for converting NOx in exhaust gas from an engine driven at lean A/F ratios at appropriate times. In actually purifying exhaust gas, the catalyst is supported by a binder on a support, such as a honeycomb support, made of an inorganic porous material, such as cordierite, and the support supporting the catalyst is placed in the exhaust passage of an engine.

A feature of the catalyst of the present invention is the use of an oxygen storage component formed by cohesion of primary particles of a Ce-Zr-based mixed oxide having an average particle size of less than 10 nm. Hereinafter, the catalyst is described in detail.

### Inventive and Comparative Examples of Oxygen Storage Component

### - Example 1 (CeO₂-rich) -

An oxygen storage component in the present invention was prepared by evaporative decomposition. Specifically, predetermined amounts of zirconium oxynitrate and cerium nitrate were dissolved in water to prepare a source solution (source solution preparation). Next, the source solution was supplied to a furnace in the form of droplets by spraying it using air as a carrier gas (ultrasonic evaporative decomposition). The temperature in the furnace was set at 1000°C. Particles sent out of the furnace were collected by a bag filter, rinsed in water and dried, thereby obtaining an oxygen storage component of which primary particles have an average particle size of less than 10 nm (a CeO₂-rich mixed oxide). In this example, the oxygen storage component was prepared to have a composition of CeO₂ : ZrO₂ = 75 : 25 in mass ratio.

### - Example 2 (ZrO₂-rich) -

An oxygen storage component for Example 2 was prepared in the same manner as in Example 1 except that the composition of the oxygen storage component was CeO₂ : ZrO₂ = 25 : 75 in mass ratio, i.e., ZrO₂-rich. The average particle size of primary particles of the oxygen storage component was less than 10 nm and the catalyst composition was the same as in Example 1.

### - TEM photographs of oxygen storage components -

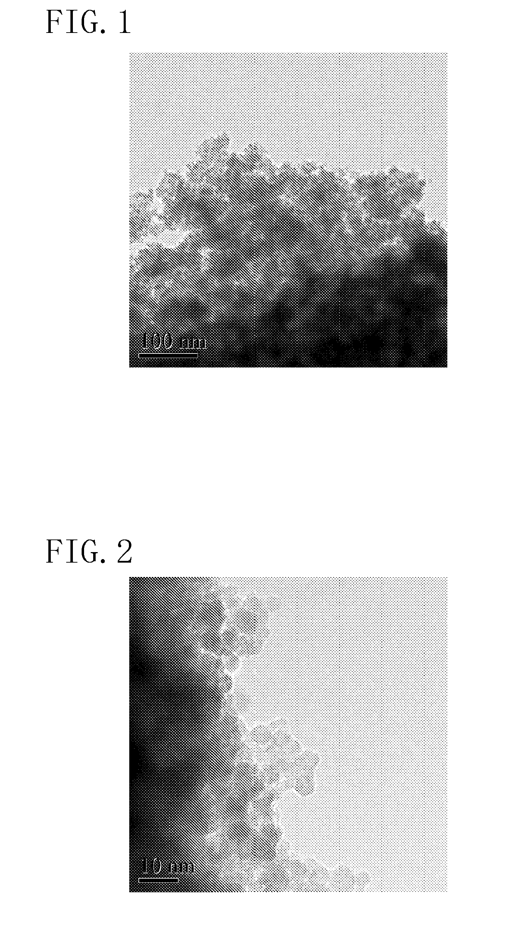

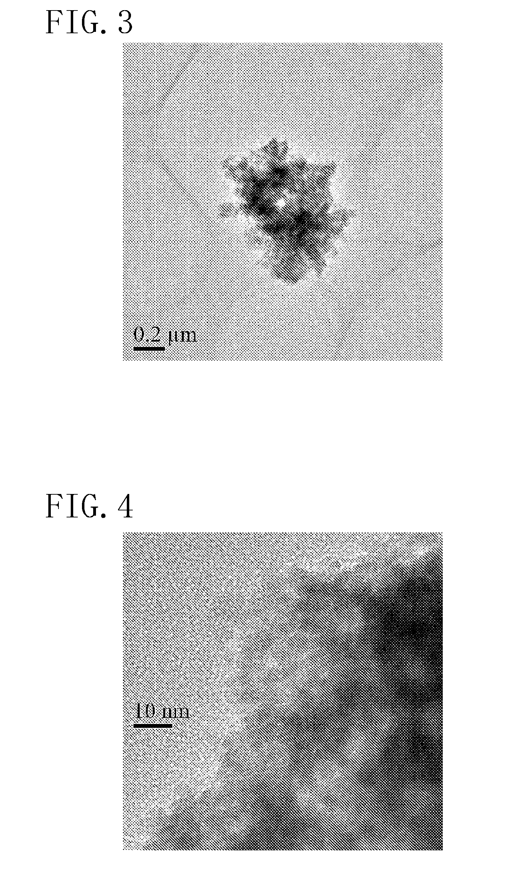

Figures **1** and **2** show photographs of the oxygen storage component (CeO₂-rich) according to Example 1, taken with transmission electron microscopy (TEM), and Figures **3** and **4** show photographs of the oxygen storage component (ZrO₂-rich) according to Example 2, taken with TEM. Both the oxygen storage components, as shown in Figures **2** and **4,** are constituted by solid (compact) secondary particles each formed by cohesion of a plurality of 4 to 10 nm-size primary particles. Each secondary particle has fine pores of several nanometer diameter formed inside.

### - Comparative Example 1 -

A CeO₂-rich oxygen storage component was prepared by coprecipitation. Specifically, predetermined amounts of zirconium oxynitrate and cerium nitrate were mixed with water. The mixed solution was stirred at room temperature for about one hour, heated up to 80°C and then mixed with 50 mL of 28% aqueous ammonia, thereby obtaining a white-turbid solution. The white-turbid solution was allowed to stand for a day and night to produce a cake. The cake was centrifuged and well rinsed in water. The water-rinsed cake was dried at approximately 150°C and then calcined by keeping it at 400°C for five hours and then at 1000°C for one hour.

The composition of the obtained oxygen storage component was CeO₂ : ZrO₂ = 75 : 25 in mass ratio and was constituted by solid (compact) secondary particles each formed by cohesion of primary particles with a particle size of 10 to several hundred nanometers.

### - Comparative Example 2 -

A ZrO₂-rich oxygen storage component was prepared, like Comparative Example 1, by coprecipitation. The composition of the obtained oxygen storage component was CeO₂ : ZrO₂ = 25 : 75 in mass ratio and was constituted by solid (compact) secondary particles each formed by cohesion of primary particles with a particle size of 10 to several hundred nanometers.

### Inventive and Comparative Examples of NOx Storage Catalyst

### - Example A -

A CeO₂-rich (CeO₂ : ZrO₂ = 75 : 25) oxygen storage component of the present invention was prepared in the same manner as in Example 1. The primary particles had an average particle size of less than 10 nm.

Next, the oxygen storage component, γ-alumina powder, precious metal solutions (a diamminedinitro platinum nitrate solution and a rhodium nitrate solution), NOx storage components (barium acetate and strontium acetate) and water were put in their respective predetermined amounts in a container and stirred, thereby obtaining a suspension. The suspension was heated up to 100°C under atmospheric pressure while being stirred, thereby evaporating water and obtaining powder (normal-pressure evaporation to dryness).

The powder obtained by evaporation to dryness was calcined by keeping it at 500°C for two hours, thereby obtaining catalyst powder in which precious metal particles and NOx storage component particles were carried on the oxygen storage component and the γ-alumina powder both serving as support materials.

Next, the catalyst powder was mixed with a basic Zr binder and water to obtain a slurry. A honeycomb support made of cordierite was immersed in the slurry and then picked up and surplus slurry was removed by air blow. Thereafter, the honeycomb support was calcined by keeping it at 500°C for two hours, thereby obtaining an exhaust gas purification catalyst. The amounts of oxygen storage component, γ-alumina. Pt, Rh, Ba and Sr carried per L of the honeycomb support were 150g, 150g, 3.5g, 0.3g, 35g and 5g, respectively.

### - Example B -

An exhaust gas purification catalyst was prepared in the same manner as in Example A except that the carrying of precious metals and NOx storage components on the support materials was implemented using vacuum degasification instead of normal-pressure evaporation to dryness.

Specifically, the oxygen storage component, γ-alumina powder, precious metal solutions (a diamminedinitro platinum nitrate solution and a rhodium nitrate solution), NOx storage components (barium acetate and strontium acetate) and water were put in their respective predetermined amounts in a container and stirred, thereby obtaining a suspension. The internal pressure of the container was reduced down to 20 kPa to degas the container while the suspension was stirred and heated up to 70°C to 80°C, thereby evaporating water (vacuum degasification).

The average particle size of primary particles of the oxygen storage component and the catalyst composition were the same as those in Example A.

### - Comparative Example -

An exhaust gas purification catalyst was obtained in the same manner (normal-pressure evaporation to dryness) as in Example A except that primary particles of the oxygen storage component were provided to have an average particle size of 25 nm. The composition of the catalyst was the same as in Example A.

### - NOx conversion Performance Evaluation -

The catalysts of Examples A and B and Comparative Example were aged by keeping them at 750°C for 24 hours under atmospheric conditions and then evaluated in terms of NOx conversion performance using a model gas flow reactor and an exhaust gas analyzer.

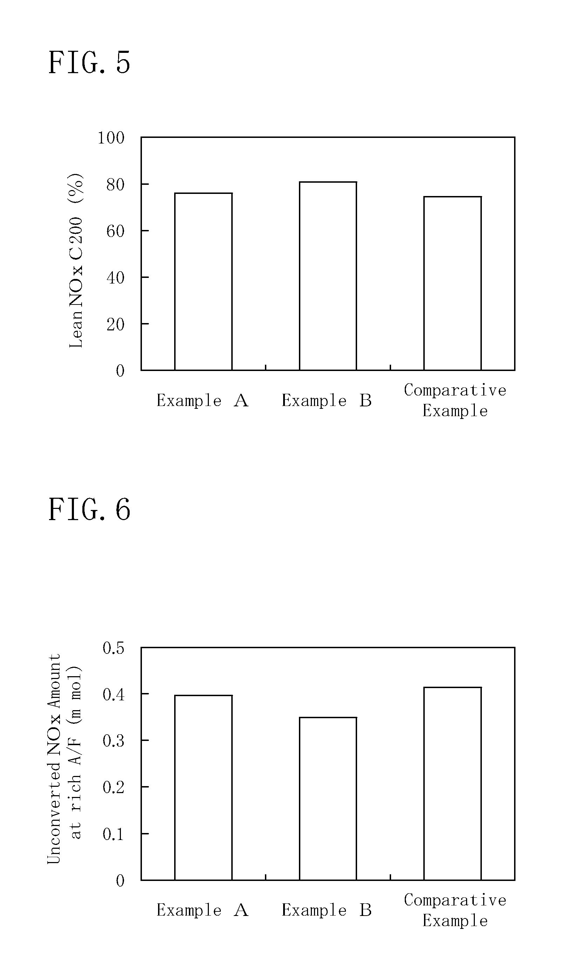

Specifically, a model exhaust gas of lean A/F ratio was first allowed to flow through each catalyst for 60 seconds and then switched to another model exhaust gas of rich A/F ratio and the switched model exhaust gas was allowed to flow through each catalyst for 60 seconds. After this cycle was repeated several times, the catalyst was measured in terms of the NOx conversion efficiency for up to 60 seconds from the point of time when the gas composition was switched from rich A/F to lean A/F (lean NOx conversion efficiency) and the amount of NOx exhausted as unconverted for up to 60 seconds from the point of time when the gas composition was switched from lean A/F to rich A/F. The gas temperature at the catalyst entrance was set at 200°C. The measured lean NOx conversion efficiencies are shown in Figure **5** and the measured amounts of NOx exhausted as unconverted under rich A/F conditions are shown in Figure **6.**

With reference to Figure **5,** Examples A and B exhibit higher lean NOx conversion efficiencies than Comparative Example and, particularly, Example B employing vacuum degasification exhibits a high lean NOx conversion efficiency. With reference to Figure **6,** it can be seen that Examples A and B have less amounts of NOx exhausted than Comparative Example, Example B employing vacuum degasification, particularly, exhibits a small amount of NOx exhausted and, therefore, Examples A and B have high rich NOx conversion efficiencies. The reason for Examples A and B having high NOx conversion performance can be considered to be due to that since primary particles of the oxygen storage components have a small average particle size of less than 10 nm, catalytic precious metals and NOx storage components are carried on the oxygen storage components with high dispersibility and the oxygen storage components exhibit relatively high specific surface areas even after aged. Further, the reason for Example B having higher NOx conversion performance than Example A can be considered to be due to that, by employing vacuum degasification, the fine pores in the oxygen storage component are filled in with the water solutions of catalytic precious metals and NOx storage components concurrently with removal of air from the fine pores, and that the catalytic precious metals and the NOx storage components are thereby carried substantially uniformly over the surface of the oxygen storage component and the insides of the fine pores.

### - Specific Surface Area of Oxygen Storage Component -

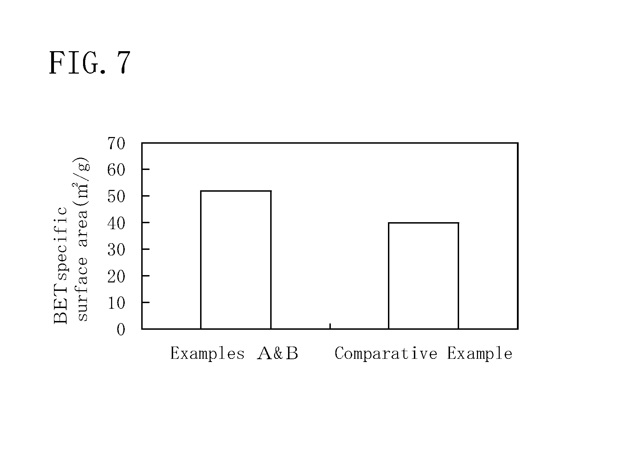

The oxygen storage components of Examples A and B and Comparative Example were measured in terms of BET specific surface area after aged. The aging was implemented by keeping each oxygen storage component at 750°C for 24 hours under atmospheric conditions. The measurement results are shown in Figure **7**. The oxygen storage components of Examples A and B both exhibited a specific surface area of 52 m²/g, while the oxygen storage component of Comparative Example exhibited a specific surface area of 40 m²/g. Figure **7** shows that the oxygen storage components of Examples A and B have a large specific surface area even after aged.

## Claims

1. An exhaust gas purification catalyst comprising an oxygen storage component constituted by a mixed oxide containing cerium and zirconium, in which a catalytic metal and a NOx storage component are carried on the oxygen storage component, the exhaust gas purification catalyst **characterized in that**
the oxygen storage component is in the form of secondary particles in each of which primary particles of an average particle size of less than 10 nm cohere to form fine pores inside each said secondary particle.

2. The exhaust gas purification catalyst of claim 1, **characterized in that** at least one of the catalytic metal and the NOx storage component is carried on the surface of the oxygen storage component and the insides of the fine pores.

3. A method for fabricating an exhaust gas purification catalyst, comprising the steps of:
obtaining an oxygen storage component constituted by a mixed oxide containing cerium and zirconium and in the form of secondary particles in each of which primary particles of an average particle size of less than 10 nm cohere to form fine pores inside each said secondary particle;
preparing a suspension in which the oxygen storage component is dispersed in a water solution of a mixture of catalytic metal ions and metal ions serving as a NOx storage component; and
subjecting the suspension in a container to vacuum degasification concurrently with heat application to evaporate water, thereby carrying the catalytic metal and the NOx storage component on the surface of the oxygen storage component and the insides of the fine pores.
